# EUROPEAN PATENT APPLICATION

(11) **EP 4 492 239 A1**
(43) Date of publication of application: **15.01.2025**
(21) Application number: 22930659.2
(22) Date of filing: 16.12.2022
(51) Int. Cl.: G06F 9/52

(54) **TWO SYSTEM STATE SYNCHRONIZATION METHOD AND APPARATUS, ELECTRONIC DEVICE, AND READABLE STORAGE MEDIUM**

(30) Priority: 11.03.2022 CN 202210241673
(71) Applicant: GUANGDONG OPPO MOBILE TELECOMMUNICATIONS CORP., LTD., Dongguan, Guangdong 523860 (CN)
(72) Inventor: ZHANG, Guanqun, Dongguan, Guangdong 523860 (CN); CHEN, Yanan, Dongguan, Guangdong 523860 (CN)
(74) Representative: Novagraaf Technologies
(86) International application number: PCT/CN2022/139666
(87) International publication number: WO 2023/169039

(57) **Abstract**

A two system state synchronization method, which is applied to an electronic device, the electronic device being able to run a first system and a second system, and the method comprising: in a first running mode or a second running mode, detecting a working mode state of the first system (202); and when the working mode state of the first system is changed, adjusting a working mode state of the second system to be the same as the working mode state of the first system, where in the first running mode, the first system and the second system are both running, and only the first system performs interface display, and in the second running mode, the first system and the second system are both running, and either the first system or the second system performs interface display (204).

## Description

### CROSS REFERENCE TO RELATED APPLICATIONS

This application claims priority to Chinese Patent Application No. 202210241673.0, filed on March 11, 2022 in the China National Intellectual Property Administration, and entitled "dual-system state synchronization method, apparatus, electronic device, and readable storage medium", which is herein incorporated by reference in its entirety.

### TECHNICAL FIELD

The present disclosure relates to the field of electronic devices, and in particular to a dual-system state synchronization method, an apparatus, an electronic device, a computer-readable storage medium and a computer program product.

### BACKGROUND

With the development of electronic device technologies, multi-system devices have emerged. Various systems of an electronic device may operate in multiple system operation modes, but the systems are independent of each other. There is a problem of state desynchronization between various systems of the electronic device.

### SUMMARY OF THE DISCLOSURE

A dual-system state synchronization method, an apparatus, an electronic device, a computer-readable storage medium and a computer program product are provided in the present disclosure. When the electronic device is switched between various systems, the state synchronization of the electronic device may be guaranteed.

A dual-system state synchronization method performed by an electronic device. The electronic device is capable of running a first system and a second system. The method includes: detecting, in a first operation mode or in a second operation mode, a working mode state of the first system; and adjusting, in response to a change in the working mode state of the first system, a working mode state of the second system to be the same as that of the first system. In the first operation mode, both the first system and the second system are in operation, and an interface display is only performed by the first system. In the second operation mode, both the first system and the second system are in operation, and the interface display is performed by either the first system or the second system.

A dual-system state synchronization apparatus applied to an electronic device. The electronic device is capable of running the first system and the second system. The apparatus includes a detecting module and an adjusting module. The detecting module is configured to detect, in the first operation mode or in the second operation mode, the working mode state of the first system. The adjusting module is configured to adjust, in response to the change in the working mode state of the first system, the working mode state of the second system to be the same as that of the first system. In the first operation mode, both the first system and the second system are in operation, the interface display is only performed by the first system. In the second operation mode, both the first system and the second system are in operation, and the interface display is performed by either the first system or the second system.

An electronic device including a memory and a processor is provided. The memory stores a computer program. When the computer program is executed by the processor, the processor is enabled to implement the following operations: detecting, in the first operation mode or in the second operation mode, the working mode state of the first system; and adjusting, in response to the change in the working mode state of the first system, the working mode state of the second system to be the same as that of the first system. In the first operation mode, both the first system and the second system are in operation, the interface display is only performed by the first system. In the second operation mode, both the first system and the second system are in operation, and the interface display is performed by either the first system or the second system.

A computer-readable storage medium storing a computer program is provided. The computer program, when being executed by a processor, is configured to implement the following operations: detecting, in the first operation mode or in the second operation mode, the working mode state of the first system; and adjusting, in response to the change in the working mode state of the first system, the working mode state of the second system to be the same as that of the first system. In the first operation mode, both the first system and the second system are in operation, the interface display is only performed by the first system. In the second operation mode, both the first system and the second system are in operation, and the interface display is performed by either the first system or the second system.

A computer program product including a computer program is provided. The computer program, when being executed by a processor, is configured to implement the following operations: detecting, in the first operation mode or in the second operation mode, the working mode state of the first system; and adjusting, in response to the change in the working mode state of the first system, the working mode state of the second system to be the same as that of the first system. In the first operation mode, both the first system and the second system are in operation, the interface display is only performed by the first system. In the second operation mode, both the first system and the second system are in operation, and the interface display is performed by either the first system or the second system.

For the above-mentioned dual-system state synchronization method, the apparatus, the electronic device, the computer-readable storage medium and the computer program product, in the first operation mode, both the first system and the second system are in operation, the interface display is only performed by the first system. In the second operation mode, both the first system and the second system are in operation, and the interface display is performed by either the first system or the second system. In the first operation mode or the second operation mode, whether the working mode state of the first system of the electronic device has changed is detected. In response to the change in the working mode state of the first system, the working mode state of the second system of the electronic device is adjusted to be the same as that of the first system. The state consistency of the working mode state of the various systems of the electronic device is ensured, thereby effectively avoiding the interference due to state desynchronization.

### BRIEF DESCRIPTION OF THE DRAWINGS

In order to more clearly illustrate technical solutions of the present disclosure or the related art, the drawings required in the description of the embodiments or the related art will be briefly introduced below. The drawings in the following description are obviously only some embodiments of the present disclosure. For those of ordinary skills in the art, drawings of other embodiments could be obtained based on these drawings without creative efforts.
Fig. 1 is an application environment diagram of a dual-system state synchronization method according to an embodiment of the present disclosure.
Fig. 2 is a flowchart of the dual-system state synchronization method according to an embodiment of the present disclosure.
Fig. 3 is a flowchart for synchronizing the working mode states of a first system and a second system according to an embodiment of the present disclosure.
Fig. 4 is a schematic flowchart of the dual-system state synchronization method for switching from a light intelligent mode to another operation mode according to an embodiment of the present disclosure.
Fig. 5 is a structural block diagram of a dual-system state synchronization apparatus according to an embodiment of the present disclosure.
Fig. 6 is a schematic diagram of an internal structure of an electronic device according to an embodiment of the present disclosure.

### DETAILED DESCRIPTION

For better understanding of the present disclosure, the present disclosure will be described in a more comprehensive manner with reference to relevant drawings. The drawings show preferred embodiments of the present disclosure. However, the present disclosure may be embodied in many different forms, which are not limited to the embodiments illustrated in the present disclosure. On the contrary, the purpose of providing these embodiments is to make the understanding of the present disclosure more thorough and comprehensive.

It should be appreciated that, the terms "first", "second", etc. as used in the present disclosure may be used herein to describe various components, but these components are not limited by these terms. These terms are used only to distinguish a first component from another one. By way of example, without departing from the scope of the present disclosure, a first system may be referred to as a second system. Similarly, the second system may be referred to as the first system. Both the first system and the second system are systems, but they are not a same system.

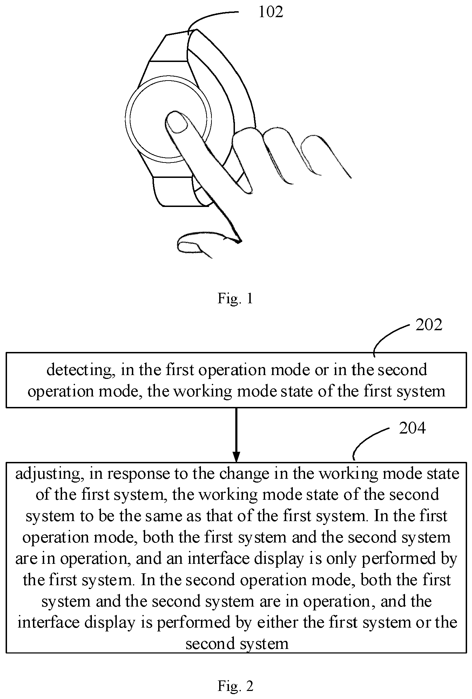

A dual-system state synchronization method provided in the present disclosure may be applied to an application environment as illustrated in Fig. 1. The electronic device 102 may perform an interaction with a user. At least two systems (i.e., operating systems) may be operable in the electronic device 102. A case where a first system and a second system are operable on the electronic device 102 is taken as an example. Detecting, in a first operation mode or in a second operation mode, a working mode state of the first system. In the first operation mode, both the first system and the second system are in operation, an interface display is only performed by the first system. In the second operation mode, both the first system and the second system are in operation, and the interface display is performed by either the first system or the second system. Adjusting, in response to a change in the working mode state of the first system, the working mode state of the second system to be the same as that of the first system. Thus, it is ensured that, a synchronization of system states may be effectively guaranteed when the electronic device is switched from one system to a different one. The electronic device 102 may be, but is not limited to, a variety of personal computers, laptops, smartphones, tablet computers, internet of things (IoT) devices, and portable wearable devices. The IoT devices may be smart speakers, smart televisions, smart air conditioners, smart in-vehicle devices or etc. The portable wearable devices may be smart watches, smart bracelets, head-mounted devices or etc.

Multiple systems may run or operate on the electronic device. The multiple systems may include at least two systems. The at least two systems include the first system and the second system. The electronic device includes a first processor and a second processor. The first processor corresponds to the first system (i.e., a large-core system), and the second processor corresponds to the second system (i.e., a small-core system). Each of the first processor and the second processor is a microprocessor. The first processor is a core processor. The first processor and the second processor may be configured with corresponding microprocessors according to actual applications. The system may be the Android system, the Linux system, the Windows system, the IOS system, the real-time operating system (RTOS), etc., which is not limited here.

In some embodiments, a power consumption of the first system during a normal operation is greater than that of the second system during the normal operation. For example, the first processor may be a central process unit (CPU) processor. The first system may be the Android system correspondingly. The second processor may be a microcontroller unit (MCU) processor, and the second system may be the real time operating system (RTOS) correspondingly. The clock speed of the CPU may be up to 1.5 gigahertz (GHz), while the clock speed of the MCU is about 150 megahertz (MHz). Therefore, the power consumption of the first processor is greater than that of the second processor, and the power consumption of the first system is greater than that of the second system.

At least one of the first operation mode, the second operation mode, and a third operation mode may at least be present during a startup operation process of the electronic device with the multiple systems. The first operation mode is a high-performance mode. In the first operation mode, both the first system and the second system start normally, and only the first system performs the interface display. In other words, a display authority of a screen of the electronic device is only controlled by the first system. The second operation mode is a hybrid mode. In the second operation mode, both the first system and the second system start normally. The first system or the second system may perform the interface display. In other words, the display authority of the screen of the electronic device may be controlled either by the first system or by the second system. In other words, the display authority of the screen of the electronic device may be dynamically switched between the two systems according to the operating state of the electronic device. The third operation mode is a light intelligent mode. In the third operation mode, the first system is off or disabled, only the second system is in operation, and only the second system performs the interface display. In other words, the display authority of the screen of the electronic device is controlled by the second system. The power consumption of the electronic device in the first operation mode is greater than that in the second operation mode, and the power consumption of the electronic device in the second operation mode is greater than that in the third operation mode.

Fig. 2 is a flowchart of the dual-system state synchronization method according to an embodiment of the present disclosure. The dual-system state synchronization method in the present embodiment is described as performed on the electronic device of Fig. 1 for an example. The dual-system state synchronization method includes operations at blocks illustrated in Fig. 2.

In the operation at block 202: detecting, in the first operation mode or in the second operation mode, the working mode state of the first system.

Both the first operation mode and the second operation mode are modes in which the operating systems of the electronic device are able to operate. In other words, in the first operation mode and the second operation mode, both the first system and the second system are operable. The working mode refers to, without limitation, the mode adopted by the systems of the electronic device for working in operation modes, such as a sleep mode, an eye protection mode, a flight mode, etc. The working mode states may include: an enabled state or on state; and, a disabled state or off state.

Specifically, when the electronic device is in the first operation mode, both the first system and the second system of the electronic device are in operation, and only the first system performs the interface display, the second system is unable to perform the interface display. The interaction with the user is performed through the interface displayed by the first system, and the electronic device may detect the working mode state of the first system. Further, in response to the electronic device being in the first operation mode, the electronic device may detect whether the working mode state of the first system is an enabled state or a disabled state.

In the second operation mode, both the first system and the second system are in operation, and the first system or the second system performs the interface display. The interaction with the user is performed through the displayed interface. In the second operation mode, the electronic device may detect the working mode state of the first system.

In some embodiments, in a case where the electronic device is switched from the second operation mode to the first operation mode, both the first system and the second system remain in operation, and it is adapted from a case where the interface interaction is performed by the first system or the second system, to another case where the interface interaction is performed only by the first system. Thus, the electronic device may detect the working mode state of the first system.

In some embodiments, in the first operation mode or the second operation mode, or in the case of switching from the second operation mode to the first operation mode, the electronic device may perform real-time or timed listening for changes in the working mode state of the first system. The first system may notify in real time, in response to the change in the working mode state of the first system, the second system.

In the operation at block 204: adjusting, in response to the change in the working mode state of the first system, the working mode state of the second system to be the same as that of the first system.

Specifically, the electronic device adjusts, in response to detecting the change in the working mode state of the first system, the working mode state of the second system, such that the working mode state of the second system is adjusted to be the same as the working mode state of the first system.

In some embodiments, in response to the change in the working mode state of the first system, the second system may be notified in real time by the first system, such that the second system may be controlled to adjust its own working mode state to be the same as the working mode state of the first system.

In some embodiments, the first system is a big-core operating system, and the second system is a small-core operating system. The big-core operating system may realize more functionalities and consume more power, and the small-core operating system realizes fewer functionalities and consumes less power.

In some embodiments, determining, in response to the change in the working mode state of the first system, at least one of a group consisting of a screen brightness, a silent mode state, and a vibration mode state corresponding to the changed working mode state. Adjusting the working mode state of the second system of the electronic device to be the same as the working mode state of the first system, and adjusting at least one of the group consisting of the screen brightness, the silent mode state, and the vibration mode state of the second system to be the same as the changed first system.

In some embodiments, the method further includes: detecting, in the second operation mode, the working mode state of the second system; and adjusting, in response to a change in the working mode state of the second system, the working mode state of the first system to be the same as that of the second working mode state.

Specifically, in the second operation mode, both the first system and the second system are in operation, and the first system or the second system performs the interface display. The interaction with the user is performed through the displayed interface. In the second operation mode, the electronic device may detect the working mode state of the first system. In response to the change in the working mode state of the second system, the electronic device may adjust the working mode state of the first system to be the same as that of the second working mode state. Further, when the change in the working mode state of the second system is detected, the first system may be notified in real time by the second system, such that the first system may be controlled to adjust its own working mode state to be the same as the working mode state of the second system.

In the present embodiment, detecting, in the first operation mode or in the second operation mode, the working mode state of the first system of the electronic device. Adjusting, in response to the change in the working mode state of the first system, the working mode state of the second system of the electronic device to be the same as that of the first system. The consistency of the states of the various systems of the electronic device in the working mode states is ensured, thereby effectively avoiding an interference due to state desynchronization.

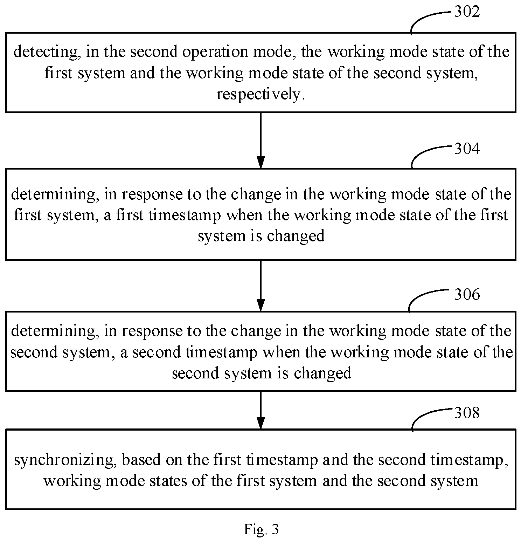

In some embodiments, the method further includes operations at bocks as illustrated in Fig. 3.

In the operation at block 302: detecting, in the second operation mode, the working mode state of the first system and the working mode state of the second system, respectively.

Specifically, in the second operation mode, both the first system and the second system are in operation. The interface interaction is performed by the first system, or the interface interaction is performed by the second system. That is, the display authority of the screen of the electronic device may be controlled either by the first system or by the second system. Thus, in the second operation mode, or in response to switching from the first operation mode to the second operation mode, the electronic device needs to detect both the working mode state of the first system and the working mode state of the second system, respectively. Further, the electronic device may detect the working mode state of the first system and the working mode state of the second system in real time or on a timed basis, respectively.

In the operation at block 304: determining, in response to the change in the working mode state of the first system, a first timestamp when the working mode state of the first system is changed.

Specifically, the electronic device may detect the working mode state of the first system in real time or on a timed basis. The electronic device may record, in response to the change in the working mode state of the first system, the first timestamp when the working mode state of the first system is changed.

In some embodiments, the electronic device may detect the working mode state of the first system in real time or on a timed basis; record the timestamp of each detection and the corresponding working mode state; and, compare the working mode state recorded for the current detection with the working mode state recorded for an immediately preceding detection or a previous adjacent detection. In response to the working mode state recorded for the current detection being the same as the working mode state recorded for the immediately preceding detection, determining that the working mode state of the first system has not changed, and continuing with a next detection.

In response to the working mode state recorded for the current detection being different from the working mode state recorded for the immediately preceding detection, determining that the working mode state of the first system has changed, and taking the timestamp recorded for the current detection as the first timestamp.

In the operation at block 306: determining, in response to the change in the working mode state of the second system, a second timestamp when the working mode state of the second system is changed.

Specifically, the electronic device may detect the working mode state of the second system in real time or on a timed basis. The electronic device may record, in response to the change in the working mode state of the second system, the second timestamp when the working mode state of the second system is changed.

In some embodiments, the electronic device may detect the working mode state of the second system in real time or on a timed basis, record the timestamp of each detection and the corresponding working mode state, and compare the working mode state recorded for the current detection with the working mode state recorded for an immediately preceding detection or a previous adjacent detection. In response to the working mode state recorded for the current detection being the same as the working mode state recorded for the immediately preceding detection, determining that the working mode state of the second system has not changed, and continuing with the next detection. In response to the working mode state recorded for the current detection being different from the working mode state recorded for the immediately preceding detection, determining that the working mode state of the second system has changed, and taking the timestamp recorded for the current detection as the second timestamp.

In the operation at block 308: synchronizing, based on the first timestamp and the second timestamp, working mode states of the first system and the second system.

Specifically, the electronic device adjusts, based on the first timestamp and the second timestamp, the working mode state of the first system or the working mode state of the second system, such that the working mode states of the first system and the second system are identical or the same.

In some embodiments, the electronic device may compare the first timestamp with the second timestamp, and synchronize, based on the comparison result, the working mode states of the first system and the second system. Further, the electronic device may compare the first timestamp with the second timestamp, and adjust, based on the comparison results of the time stamps, either the working mode state of the first system or the working mode state of the second system, such that the working mode states of the first system and the second system are identical.

In some embodiments, the electronic device may compare the first timestamp with the second timestamp, and compare the working mode state corresponding to the first timestamp with the working mode state corresponding to the second timestamp. The electronic device may synchronize, based on the timestamp comparison results and the working mode state comparison results, the working mode states of the first system and the second system.

In some embodiments, the electronic device may adjust the working mode state of the system corresponding to the first timestamp, to be the same as the working mode state of the system corresponding to the second timestamp. Alternatively, the electronic device may adjust the working mode state of the system corresponding to the second timestamp to be the same as the working mode state of the system corresponding to the first timestamp.

In the present embodiment, detecting, in the second operation mode, or in response to switching from the first operation mode to the second operation mode, whether or not the working mode state of the first system and the working mode state of the second system have changed, respectively. Determining, in response to the change in the working mode state of the first system, the first timestamp when the working mode state of the first system is changed, thereby recording when the state of the first system changes in a timely manner. Determining, in response to the change in the working mode state of the second system, the second timestamp when the working mode state of the second system is changed, thereby recording when the state of the first system changes in a timely manner. Adjusting, based on the timestamp when the working mode state of the first system is changed and the timestamp when the working mode state of the first system is changed, the working mode state of the first system or the working mode state of the second system. In this way, the working mode states of the first system and the second system may maintain synchronized in real time.

In some embodiments, the operation of synchronizing, based on the first timestamp and the second timestamp, working mode states of the first system and the second system includes: adjusting the working mode state of a system corresponding to an earlier timestamp among the first timestamp and the second timestamp, to be the same as the working mode state of another system corresponding to a later timestamp among the first timestamp and the second timestamp.

Specifically, the electronic device may compare the first timestamp with the second timestamp, and determine the earlier timestamp and the later timestamp among the first timestamp and the second timestamp. The electronic device determines the system corresponding to the earlier timestamp and the system corresponding to the later timestamp, and adjust the working mode state corresponding to the system corresponding to the earlier timestamp to be the same as the working mode state corresponding to the system corresponding to the later timestamp.

In some embodiments, the electronic device may determine the working mode state corresponding to the first timestamp, and the working mode state corresponding to the second timestamp. In response to the working mode state corresponding to the first timestamp being different from the working mode state corresponding to the second timestamp, adjusting the working mode state corresponding to the system corresponding to the earlier timestamp, to be the same as the working mode state corresponding to the system corresponding to the later timestamp.

For example, the earlier timestamp is the first timestamp, and the later timestamp is the second timestamp. The system corresponding to the first timestamp is the first system, and the corresponding working mode state is a sleep mode enabled state. The system corresponding to the second timestamp is the second system, and the corresponding working mode state is a sleep mode disabled state. Then the electronic device adjusts the sleep mode disabled state of the second system to the sleep mode enabled state, such that both the first system and the second system are in the sleep mode enabled state.

In some embodiments, determining at least one selected from the group consisting of the screen brightness, the silent mode state, and the vibration mode state corresponding to the working mode state corresponding to the later timestamp. Adjusting the working mode state of the system corresponding to the earlier timestamp to be the same as the working mode state of the system corresponding to the later timestamp, and adjusting at least one selected from the group consisting of the screen brightness, the silent mode state, and the vibration mode state of the system corresponding to the later timestamp to be the same as the system corresponding to the earlier timestamp.

In the present embodiment, adjusting the working mode state of the system corresponding to the earlier timestamp among the first timestamp and the second timestamp, to be the same as the working mode state of another system corresponding to the later timestamp among the first timestamp and the second timestamp. It is possible to determine, based on the timestamps, the system in which a most recent change in the working mode state has occurred, thereby adjusting the working mode states of other systems to the most recent working mode state, such that the various systems of the electronic device may keep the consistency of their most up-to-date state.

In some embodiments, the method further includes: detecting, in the third operation mode, the working mode state of the second system, wherein in the third operation mode, only the second system is in operation; and recording, in response to the change in the working mode state of the second system, corresponding associated state data. The associated state data includes the changed working mode state. The associated state data is configured to indicate adjusting the working mode state of the first system to be the same as the changed working mode state.

The third operation mode is a mode in which the second system of the electronic device is in operation, while the first system is not in operation.

Specifically, in the third operation mode, for the electronic device, only the second system is in operation, and only the second system performs the interface display. Thus, the working mode state of the second system is detected on a timed basis or in real time. Recording, in response to the change in the working mode state of the second system, the associated state data corresponding to the state change. The associated state data includes the changed working mode state.

The electronic device may adjust, based on the associated state data, the working mode state of the first system, such that the working mode state of the first system is the same as the changed working mode state of the second system.

In some embodiments, the electronic device may send the associated state data to the first system via the second system, such that the first system may receive the associated state data while in operation, and the first system may adjust, based on the associated state data, its own working mode state to be the same as the changed working mode state of the second system.

In some embodiments, detecting, in either the third operation mode, or in response to switching from the first operation mode to the third operation mode, or in response to switching from the second operation mode to the third operation mode, the working mode state of the second system; and recording, in response to the change in the working mode state of the second system, the corresponding associated state data.

In the present embodiment, since in the third operation mode, only the second system is in operation, while the first system is not in operation, whether or not the working mode state of the second system has changed may be detected. In response to the change in the working mode state of the second system, the associated state data including the changed working mode state is recorded, thereby indicating, by the associated state data, adjustment of the working mode state of the first system to be the same as the changed working mode state. In this way, the first system, upon resumption or restore of operation, may maintain in the same working mode state as the second system. Thus, it is possible to ensure the consistency of the working mode states of the various systems during operation. Further, it is possible to guarantee the consistency of the working mode states of various systems both before and/or after the switch of various systems.

In some embodiments, the method further includes: sending, in response to switching from the third operation mode to the first operation mode or to the second operation mode, the associated state data to the first system; and adjusting the working mode state of the first system to be the same as the changed working mode state of the second system.

Specifically, in the third operation mode, only the second system is in operation, and the first system is not in operation, thus the first system is unable to receive the data sent from the second system in real time. The first system may operate in the first operation mode or the second operation mode, thus in response to switching from the third operation mode to the first operation mode or to the third operation mode, the associated state data is sent to the first system by the second system. The first system adjusts its working mode state to the changed working mode state of the associated state data. In this way, the working mode state of the first system is the same as the working mode state of the second system.

In the present embodiment, since in the third operation mode, only the second system is in operation, while the first system is not in operation, thus in response to switching from the third operation mode to the first operation mode or to the second operation mode, the associated state data is sent to the first system. The first system, upon resumption or restore of operation, may maintain in the same working mode state as the second system. In this way, it is possible to ensure that, the working mode states of various systems of the electronic device maintain synchronized during operation.

In some embodiments, the associated state data includes at least one selected from the group consisting of a first state of the vibration mode, a first state of the silent mode, and a first screen brightness after the state change. The method further includes: adjusting, in response to the associated state data including the first screen brightness, the screen brightness corresponding to the first system to the first screen brightness; adjusting, in response to the associated state data including the first state of the silent mode, the silent mode state of the first system to the first state of the silent mode; and adjusting, in response to the associated state data including the first state of the vibration mode, the vibration mode state of the first system to the first state of the vibration mode.

Specifically, recording, in response to the change in the working mode state of the second system, the associated state data after the state change. The associated state data includes at least one selected from the group consisting of the first state of the vibration mode, the first state of the silent mode, and the first screen brightness after the state change. The first screen brightness refers to the screen brightness of the second system after the state change. The first state of the silent mode refers to the state corresponding to the silent mode of the second system after the state change. For example, the first state of the silent mode is the enabled state or the disabled state. The first state of the vibration mode refers to the state corresponding to the vibration mode of the second system after the state change.

In response to switching from the third operation mode to the first operation mode or to the second operation mode, the electronic device sends the associated state data to the first system via the second system. The first system adjusts, in response to the associated state data received by the first system including the first screen brightness, a screen brightness corresponding to itself to the first screen brightness. The first system adjusts, in response to the associated state data received by the first system including the first state of the silent mode, a silent mode state corresponding to itself to the first state of the silent mode. The first system adjusts, in response to the associated state data received by the first system including the first state of the vibration mode, a vibration mode state corresponding to itself to the first state of the vibration mode.

In some embodiments, after the change in the working mode state of the second system, the screen brightness corresponding to the second system may be modified multiple times, and the screen brightness from the last modification may be used as the first screen brightness after the state change.

In the present embodiment, adjusting, in response to the associated state data including the first screen brightness, the screen brightness corresponding to the first system to the first screen brightness. In this way, the consistency of the working mode states and the screen brightness between various systems may be maintained, thereby avoiding eye discomfort caused by significant changes in screen brightness when the user switches between systems. Adjusting, in response to the associated state data including the first state of the silent mode, the silent mode state of the first system to the first state of the silent mode. In this way, the consistency of the working mode states and the silent mode states between various systems may be maintained, thereby avoiding acoustic effects due to the silent mode state after the systems are switched. Adjusting, in response to the associated state data including the first state of the vibration mode, the vibration mode state of the first system to the first state of the vibration mode. In this way, the consistency of the working mode states and the vibration mode states between various systems may be maintained, thereby avoiding the effects due to the vibration mode state after the systems are switched.

In some embodiments, the associated state data includes at least one selected from the group consisting of a second state of the vibration mode, a second state of the silent mode, and a second screen brightness before the state change. The method further includes: in response to the working mode state entering the disabled state: adjusting, in response to the associated state data including the second screen brightness, the screen brightness of both the first system and the second system to the second screen brightness; adjusting, in response to the associated state data including the second state of the silent mode, the silent mode states of both the first system and the second system to the second state of the silent mode; and adjusting, in response to the associated state data including a second state of the vibration mode, the vibration mode states of both the first system and the second system to the second state of the vibration mode.

Specifically, in response to the change in the working mode state of the second system, the electronic device records the changed working mode state of the second system, and may further record at least one selected from the group consisting of the second state of the vibration mode, the second state of the silent mode, and the second screen brightness before the state change. The second screen brightness refers to the screen brightness of the second system before the state change. The second state of the silent mode refers to the state corresponding to the silent mode of the second system before the state change. The second state of the vibration mode refers to the state corresponding to the vibration mode of the second system before the state change. For example, the second state of the vibration mode is an enabled state or a disabled state.

Sending the at least one selected from the group consisting of the second state of the vibration mode, the second state of the silent mode, and the second screen brightness, and the changed working mode state to the first system as the associated state data, such that the first system may adjust its working mode state to the changed working mode state of the associated state data. In this way, the working mode state of the first system is the same as the working mode state of the second system.

In case where the working mode state is adjusted from the enabled state to the disabled state, in response to the associated state data including the second screen brightness, adjusting, by the first system, the screen brightness corresponding to the first system to the second screen brightness, and adjusting, by the second system, the screen brightness corresponding to the second system to the second screen brightness.

In response to the associated state data including the second state of the silent mode, adjusting, by the first system, the silent mode state corresponding to the first system to the second state of the silent mode, and adjusting, by the second system, the silent mode state corresponding to the second system to the second state of the silent mode.

In response to the associated state data including the second state of the vibration mode, adjusting, by the first system, the vibration mode state corresponding to the first system to the second state of the vibration mode, and adjusting, by the second system, the vibration mode state corresponding to the second system to the second state of the vibration mode.

In the present embodiment, when the working mode state enters into the disabled state from the enabled state, in response to the associated state data including the second screen brightness, adjusting the screen brightness of both the first system and the second system to the second screen brightness, such that in response to exiting the working mode, the second system automatically reverts to the screen brightness prior to entering the working mode, and the first system is able to maintain synchronized with the second system with respect to the screen brightness. When the working mode state enters into the disabled state, adjusting, in response to the associated state data including the second state of the silent mode, the silent mode states of both the first system and the second system to the second state of the silent mode, such that in response to exiting the working mode, the second system automatically reverts to the silent mode state prior to entering the working mode, and the first system is able to maintain synchronized with the second system with respect to the silent mode state. When the working mode state enters into the disabled state, adjusting, in response to the associated state data including the second state of the vibration mode, the vibration mode states of both the first system and the second system to the second state of the vibration mode, such that in response to exiting the working mode, without a necessity of user operation, the second system automatically reverts to the vibration mode state prior to entering the working mode, and the first system is able to maintain synchronized with the second system with respect to the vibration mode state. A data synchronization is thus realized.

In some embodiments, in response to the working mode state being the enabled state, the user is allowed to modify the screen brightness, but not allowed to modify the silent mode state and the vibration mode state.

In some embodiments, in response to the working mode state being the enabled state of the sleep mode, adjusting the silent mode states of both the first system and the second system in operation to the enabled state, adjusting the vibration mode states of both the first system and the second system in operation to the disabled state, adjusting the screen brightness of both the first system and the second system in operation to the lowest value, and turning off audio and video being played. For example, in the present embodiment, the enable state of the silent mode and the disabled state of the vibration mode may be implemented by "audioManager.setRingerMode(AudioManager.RINGER_ MODE_SILENT)".

Since the brightness value of the Android system ranges from 0-255, the brightness value of the electronic device may be classified into 5 levels. The lowest level of brightness is 10. The screen brightness may be adjusted to the lowest level by "Settings. System.putInt(getContentResolver(),Settings. System. SCREEN_BRIGHTNESS,10)".

Based on a predefined audio focus preemption protocol, the audio and video focus may be preempted, thereby turning off the audio or video being currently played.

In some embodiments, in the sleep mode, the silent mode is inoperable, and the vibration state is unchangeable, but the screen brightness may be modified. In a case where it is necessary to adjust the sleep mode state of the first system and the second system to the enabled state, first, the silent mode state may be adjusted to the enabled state, the vibration mode state may be adjusted to the disabled state, and the audio and video being currently played may be turned off, then the sleep mode may enter the enabled state.

In some embodiments, after entering into the sleep mode, the silent mode state of each system is unchangeable. After exiting the sleep mode, each system may automatically revert to the silent mode state prior to entering the sleep mode. After entering into the sleep mode, the vibration mode state of each system is unchangeable. After exiting the sleep mode, each system may automatically revert to the vibration mode state prior to entering the sleep mode.

After entering into the sleep mode, the modification of the screen brightness is allowed. If the user does not modify the screen brightness during the sleep mode, after exiting the sleep mode, each system may automatically revert to the brightness value prior to entering the sleep mode. If the user modifies the screen brightness during the sleep mode, the brightness value modified by the user will prevail. Audio playback will not resume on each system after exiting the sleep mode.

The approaches for entering the sleep mode may include: a user-triggered entry into the sleep mode, a user-scheduled entry into the sleep mode, or an entry into the sleep mode in response to detecting the sleeping of the user through a device algorithm. The user may choose to enable the sleep recognition functionality, which allows the electronic device to automatically recognize whether the user is sleeping, and based on this recognition, decide whether to adjust the system to the sleep mode.

In some embodiments, a power consumption of the first operation mode is greater than that of the second operation mode, and a power consumption of the second operation mode is greater than that of the third operation mode.

Specifically, in the first operation mode, both the first system and the second system are in operation, and the interface interaction with the user is performed only by the first system. In the first operation mode, the electronic device is able to provide, through the first system, a complete and comprehensive functionality for the user. That is, all the functionalities of the electronic device may be available in the first operation mode. Therefore, the power consumption of the first operation mode is the greatest.

In the second operation mode, both the first system and the second system are in operation, and the interface interaction with the user is performed by either the first system or the second system. In the second operation mode, the electronic device is able to provide, through the first system and/or the second system, a relatively large number of functionalities to the user. That is, most of the functionalities may be implemented in the second operation mode, while a few functionalities are not available in the second operation mode. Therefore, the power consumption of the second operation mode is less than that of the first operation mode.

In the third operation mode, only the second system is in operation, and the interface interaction with the user is only performed by the second system. In the third operation mode, the electronic device provides, through the second system, a reduced number of functionalities to the user. In other words, in the third operation mode, a few numbers of functionalities of the electronic device may all be available, while most of the functionalities are not available. Therefore, the power consumption of the third operation mode is less than that of the second operation mode.

For example, the first operation mode is the high-performance mode. The second operation mode is the hybrid mode. The third operation mode is the light intelligent mode. The first system is a big-core operating system, and the second system is a small-core operating system.

In the high-performance mode, the big-core operating system coexists with the small-core operating system, but all page interactions with the user are performed by the big-core operating system. The high-performance mode affords the user the most comprehensive functional experience, and all functionalities are available in this mode. However, the high-performance mode is the most power consuming.

In the hybrid mode, the big-core operating system coexists with the small-core operating system. The page interaction with the user would switch between the big-core operating system and the small-core operating system according to the different scenarios. There are a few functionalities that are not available in this mode, such as dynamic watch dials, voice assistants, etc. However, with respect to power consumption, the power consumption of the hybrid mode is less than that of the high-performance mode.

In the light intelligent mode, only the small-core operating system is in operation. Many functionalities are not available to the user, such as downloaded third-party Apps, etc. However, the light intelligent mode is the least power-consuming among the 3 modes.

In the present embodiment, the power consumption of the first operation mode is greater than that of the second operation mode, and the power consumption of the second operation mode is greater than that of the third operation mode, The user may be provided with a variety of optional operation modes while ensuring the operation of the electronic device, thereby enabling the user to choose the operation mode required according to the battery level and power consumption, and effectively satisfying the user's usage demands in different scenarios.

In some embodiments, the first operation mode is the high-performance mode. The second operation mode is the hybrid mode. The third operation mode is the light intelligent mode. The first system is the big-core operating system, and the second system is the small-core operating system. The working mode is the sleep mode.

In the high-performance mode, the big-core operating system coexists with the small-core operating system. The big-core operating system operates in the foreground, while the small-core operating system operates in the background. However, all the page interactions with the user are performed by the big-core operating system. Therefore, it is only necessary to listening or set up a listener for the change of sleep mode state in the big-core operating system, and notify the small-core operating system in real time through a dual-core communication in response to the change of the sleep mode state of the big-core operating system. In this way, the sleep mode state of the small-core operating system is allowed to be the same as the sleep mode state of the big-core operating system.

In the hybrid mode, the big-core operating system coexists with the small-core operating system. The page interaction with the user may be performed by the big-core operating system, or by the small-core operating system. Therefore, it is necessary to listening or set up a listener for the sleep mode state synchronization in each of the big-core and small-core operating systems. Changes in either one of the big-core and small-core operating systems need to be notified to another one of the big-core and small-core operating systems, so as to keep the sleep mode states synchronized.

In comparison with the high-performance mode, the hybrid mode requires introducing a concept of timestamp. In response to receiving a message of the sleep mode state change from the small-core operating system, the big-core operating system would first determine whether the sleep mode state of the big-core is the same as that of the small-core operating system. For example, the sleep mode state of the small-core operating system is the enabled state, and the sleep mode state of the big-core operating system is the disabled state. If the sleep mode state of the big-core operating system is inconsistent with that of the small-core operating system, then it is necessary to determine a chronological order between the timestamp when the change in the sleep mode state of the small-core operating system occurred and the timestamp when the most recent change in the sleep mode state of the big-core operating system occurred, the sleep mode state that changed in a later time prevails or is adopted. Vice versa, if the small-core operating system receives a message of sleep mode state change from the big-core operating system, the same handling logic would apply.

In the light intelligent mode, only the small-core operating system is in operation, and the big-core operating system is disabled. All state changes occur in the small-core operating system. it is only necessary to listening or set up a listener for the change of sleep mode state in the small-core operating system. However, since the big-core operating system is not in operation, the big-core operating system cannot be notified of the state changes of the small-core operating system in real time. Therefore, in the light intelligent mode, it is necessary to record the associated state data of the small-core operating system, such as the latest state change record of all the sleep mode states and the linked items. When returning to the high-performance mode or the hybrid mode, the associated state data is sent to the big-core operating system for processing at one time. The associated state data that needs to be sent to the big-core operating system includes: the sleep mode state of the small-core operating system after the state change (i.e., the sleep mode being in the enabled state or the sleep mode being in the disabled state), the screen brightness of the small-core operating system before and after the state change, the silent mode state of the small-core operating system before and after the state change (i.e., the silent mode being in the enabled state or the sleep mode being in the disabled state), and the vibration mode state of the small-core operating system before and after the state change (i.e., the vibration mode state being in the enable state or the sleep mode being in the disable state).

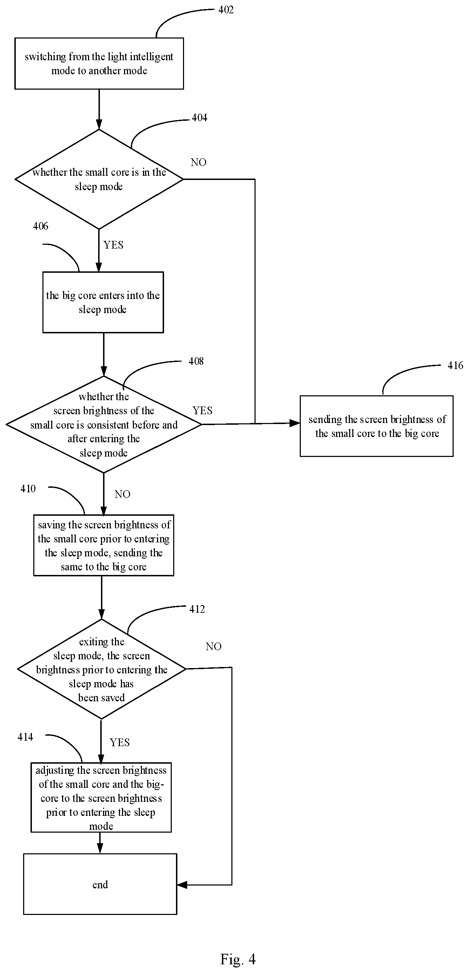

In some embodiments, the small-core operating system is referred to as a small core, and the big-core operating system is referred to as a big core. As illustrated in Fig. 4, the dual-system state synchronization method for switching from the light intelligent mode to the high-performance mode according to an embodiment is illustrated. The dual-system state synchronization method may include the operations at blocks of Fig. 4.

In the operation at block 402: switching from the light intelligent mode to the high-performance mode or the hybrid mode.

In the operation at block 404: determining whether the small-core operating system is in the sleep mode, if YES, proceeding with the operation at block 406, otherwise proceeding with the operation at block 416.

In the operation at block 406: adjusting the sleep mode state of the big-core operating system to the enabled state. In other words, adjusting the big-core operating system into the sleep mode, and proceeding with the operation at block 408.

In the operation at block 408: determining whether the current screen brightness of the small-core operating system is consistent with the screen brightness prior to entering the sleep mode, if YES, proceeding with the operation at block 416, otherwise, proceeding with the operation at block 410.

In the operation at block 410: saving the screen brightness of the small-core operating system prior to entering the sleep mode, sending the screen brightness prior to entering the sleep mode to the big-core operating system, and proceeding with the operation at block 412.

In the operation at block 412: in response to exiting the sleep mode, determining whether the screen brightness prior to entering the sleep mode has been saved by the big-core or small-core operating systems, if YES, proceeding with the operation at block 414, otherwise, terminating the process.

In the operation at block 414: adjusting the screen brightness of the small-core and big-core operating systems to the screen brightness prior to entering the sleep mode.

In the operation at block 416: sending the screen brightness of the small-core operating system to the big-core operating system, such that the screen brightness of the small-core and big-core operating systems are the same.

In the present embodiment, in response to switching from the light intelligent mode to the high-performance mode, performing, through determining whether the small-core operating system is in the sleep mode, a corresponding operation. Based on this corresponding operation, the consistency of the sleep mode states of the big-core and the small-core operating systems may be ensured, as well as the consistency of the screen brightness corresponding to the big-core and the small-core operating systems. In this way, it may be ensured that, in different modes, the user's experience of the sleep mode may be switched without being perceived.

For example, in the high-performance mode, the screen brightness of both the big-core operating system and the small-core operating system is 5. After adjusting to the light intelligent mode, the user adjusts the screen brightness of the small-core operating system to 3. In the light intelligent mode, in response to entering the sleep mode, the screen brightness is adjusted to 1 automatically. In response to switching from the light Intelligent mode to the high-performance mode, the small-core operating system sends the screen brightness 1 and the screen brightness 3 to the big-core operating system. The big-core operating system enters the sleep mode and automatically adjusts the screen brightness to 1. After exiting the sleep mode, the small-core operating system reverts to the screen brightness of 3, and the big-core adjusts the current screen brightness to the screen brightness of 3 (i.e., the screen brightness of the small-core operating system prior to entering the sleep mode). In this way, when entering and exiting the sleep mode state, the big-core and small-core operating systems are consistent with each other.

In some embodiments, the dual-system state synchronization method performed by the electronic device is provided. The electronic device is capable of running the first system and the second system. The method includes: detecting, in the first operation mode or in the second operation mode, or in response to switching from the second operation mode to the first operation mode, a working mode state of the first system; and adjusting, in response to the change in the working mode state of the first system, the working mode state of the second system to be the same as that of the first system. In the first operation mode, both the first system and the second system are in operation, the interface display is only performed by the first system. In the second operation mode, both the first system and the second system are in operation, and the interface display is performed by either the first system or the second system.

In some embodiments, detecting, in the second operation mode, or in response to switching from the first operation mode to the second operation mode, the working mode state of the first system and the working mode state of the second system, respectively; determining, in response to the change in the working mode state of the first system, the first timestamp when the working mode state of the first system is changed; determining, in response to the change in the working mode state of the second system, the second timestamp when the working mode state of the second system is changed; and adjusting the working mode state of the system corresponding to the earlier timestamp among the first timestamp and the second timestamp, to be the same as the working mode state of another system corresponding to the later timestamp among the first timestamp and the second timestamp.

In some embodiments, detecting, in the third operation mode, the working mode state of the second system, wherein in the third operation mode, only the second system is in operation; recording, in response to the change in the working mode state of the second system, corresponding associated state data, the associated state data including at least one selected from the group consisting of the first state of the vibration mode, the first state of the silent mode, and the first screen brightness after the state change, and a changed working mode state; sending, in response to switching from the third operation mode to the first operation mode or to the second operation mode, the associated state data to the first system; adjusting the screen brightness corresponding to the first system to the first screen brightness, adjusting the silent mode state of the first system to the first state of the silent mode, adjusting the vibration mode state of the first system to the first state of the vibration mode, and adjusting the working mode state of the first system to be the same as the changed working mode state of the second system.

In some embodiments, the associated state data further includes at least one selected from the group consisting of the second state of the vibration mode, the second state of the silent mode, and the second screen brightness before the state change. In response to the working mode state entering the disabled state, adjusting the screen brightness of both the first system and the second system to the second screen brightness, adjusting the silent mode states of both the first system and the second system to the second state of the silent mode, and adjusting the vibration mode state of both the first system and the second system to the second state of the vibration mode.

In the present embodiment, various systems may be operational in different operation modes. Detecting, in the first operation mode, or in response to switching from the second operation mode to the first operation mode, the working mode state of the first system of the electronic device. Adjusting, in response to the change in the working mode state of the first system, the working mode state of the second system of the electronic device to be the same as that of the first system. The state consistency of the working mode states of the various systems of the electronic device is ensured, thereby effectively avoiding the interference due to state desynchronization.

Detecting, in the second operation mode, or in response to switching from the first operation mode to the second operation mode, whether the working mode state of the first system and/or the working mode state of the second system have changed, respectively. Determining, in response to the change in the working mode state of the first system, the first timestamp when the working mode state of the first system is changed, and recording the time when the state of the first system changes in a timely manner. Determining, in response to the change in the working mode state of the second system, the second timestamp when the working mode state of the second system is changed, and recording the time when the state of the first system changes in a timely manner. Adjusting the working mode state of the system corresponding to the earlier timestamp among the first timestamp and the second timestamp, to be the same as the working mode state of another system corresponding to the later timestamp among the first timestamp and the second timestamp. It is possible to determine the system corresponding to the most recent change in the working mode state based on the timestamp, and then adjust the working mode state of the other systems to match the latest or up-to-date working mode state, thereby ensuring that all systems of the electronic device keep the consistency of their most up-to-date state.

Since in the third operation mode, only the second system is in operation, while the first system is not in operation, thus whether the working mode state of the second system has changed may be detected. In response to the change in the working mode state of the second system, the associated state data including the changed working mode state is recorded, and the associated state data is sent to the first system. In this way, the first system, upon resumption or restore of operation, may maintain in the same working mode state as the second system. Thus, it is possible to ensure that, the working mode states of various systems of the electronic device maintain synchronized during operation. Further, it is possible to guarantee the consistency of the working mode states of various systems both before and after the switch of the various systems. In addition, adjusting the screen brightness corresponding to the first system to the first screen brightness. In this way, the consistency of the working mode states and the screen brightness between various systems may be maintained, thereby avoiding eye discomfort caused by significant changes in the screen brightness when the user switches between systems. Adjusting the silent mode state of the first system to the first state of the silent mode. In this way, the consistency of the working mode states and the silent mode states between various systems may be maintained, thereby avoiding the acoustic effects due to the silent mode state after the systems are switched. Adjusting the vibration mode state of the first system to the first state of the vibration mode. In this way, the consistency of the working mode states and the vibration mode states between various systems may be maintained, thereby avoiding the effects due to the vibration mode state after the systems are switched.

In response to the working mode state entering into the disabled state from the enabled state, adjusting the screen brightness of both the first system and the second system to the second screen brightness, such that in response to exiting the working mode, the second system automatically reverts to the screen brightness prior to entering the working mode, and the first system is able to maintain synchronized with the second system with respect to the screen brightness. When the working mode state enters into the disabled state, adjusting the silent mode states of both the first system and the second system to the second state of the silent mode, such that in response to exiting the working mode, the second system automatically reverts to the silent mode state prior to entering the working mode, and the first system is able to maintain synchronized with the second system with respect to the silent mode state. When the working mode state enters into the disabled state, adjusting the vibration mode states of both the first system and the second system to the second state of the vibration mode. such that in response to exiting the working mode, without a necessity of user operation, the second system automatically reverts to the vibration mode state prior to entering the working mode, and the first system is able to maintain synchronized with the second system with respect to the vibration mode state. A data synchronization is thus realized.

Although in the flowcharts of Figs. 2-4, the various operations are illustrated sequentially as indicated by arrows, these operations are not necessarily executed sequentially according to the order indicated by these arrows. Unless explicitly stated herein, the sequence in which these operations are performed is not rigidly restricted, and these operations may be performed in any other sequence. Furthermore, at least a portion of the operations of Figs. 2-4 may include a plurality of sub-operations or a plurality of phases. These sub-operations or phases are not necessarily executed and completed at a same moment, but may be executed at different moments. The order in which these sub-operations or phases are executed is also not necessarily sequential, but these sub-operations or phases may be executed in turn or alternately with other operations or with at least a portion of the sub-operations or phases of other operations.

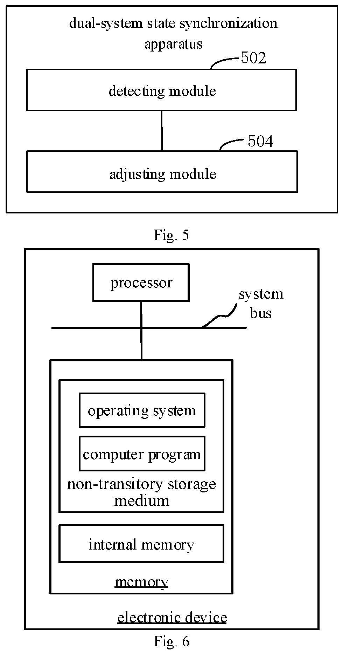

Fig. 5 is a structural block diagram of a dual-system state synchronization apparatus according to an embodiment of the present disclosure. As illustrated in Fig.5, the dual-system state synchronization apparatus includes a detecting module 502 and an adjusting module 504.

The detecting module 502 is configured to detect, in the first operation mode or in the second operation mode, a working mode state of the first system.

The adjusting module 504 is configured to adjust, in response to the change in the working mode state of the first system, the working mode state of the second system to be the same as that of the first system.

In the first operation mode, both the first system and the second system are in operation, the interface display is only performed by the first system. In the second operation mode, both the first system and the second system are in operation, and the interface display is performed by either the first system or the second system.

In the present embodiment, detecting, in the first operation mode or in the second operation mode, a working mode state of the first system of the electronic device. Adjusting, in response to the change in the working mode state of the first system, the working mode state of the second system of the electronic device to be the same as that of the first system. The state consistency of working modes of the various systems of the electronic device is ensured, thereby effectively avoiding the interference due to the state desynchronization.

In some embodiments, the detecting module 502 is further configured to: detect, in the second operation mode, the working mode state of the first system and the working mode state of the second system, respectively; determine, in response to the change in the working mode state of the first system, the first timestamp when the working mode state of the first system is changed; and determine, in response to the change in the working mode state of the second system, the second timestamp when the working mode state of the second system is changed.

The adjusting module 504 is further configured to synchronize, based on the first timestamp and the second timestamp, the working mode states of the first system and the second system.

In the present embodiment, detecting, in the second operation mode, or in response to switching from the first operation mode to the second operation mode, whether the working mode state of the first system and the working mode state of the second system is changed, respectively. Determining, in response to the change in the working mode state of the first system, the first timestamp when the working mode state of the first system is changed, and recording the time when the state of the first system changes in a timely manner. Determining, in response to the change in the working mode state of the second system, the second timestamp when the working mode state of the second system is changed, and recording the time when the state of the first system changes in a timely manner. Adjusting, based on the timestamp when the working mode state of the first system is changed and the timestamp when the working mode state of the first system is changed, the working mode state of the first system or the working mode state of the second system. In this way, the working mode states of the first system and the second system may maintain synchronized in real time.

In some embodiments, the adjusting module 504 is further configured to adjust the working mode state of the system corresponding to the earlier timestamp among the first timestamp and the second timestamp, to be the same as the working mode state of another system corresponding to the later timestamp among the first timestamp and the second timestamp.

In the present embodiment, adjusting the working mode state of the system corresponding to the earlier timestamp among the first timestamp and the second timestamp, to be the same as the working mode state of another system corresponding to the later timestamp among the first timestamp and the second timestamp. It is possible to determine, based on the timestamps, the system in which the most recent change of the working mode state has occurred, thereby adjusting the working mode states of other systems to the most recent working mode state. In this way, the various systems of the electronic device may keep the consistency of their most up-to-date state.

In some embodiments, the detecting module 502 is further configured to detect, in the third operation mode, the working mode state of the second system, wherein in the third operation mode, only the second system is in operation; and record, in response to the change in the working mode state of the second system, corresponding associated state data. The associated state data includes the changed working mode state. The associated state data is configured to indicate adjusting the working mode state of the first system to be the same as the changed working mode state.

In the present embodiment, since in the third operation mode, only the second system is in operation, while the first system is not in operation, then whether the working mode state of the second system has changed may be detected. In response to the change in the working mode state of the second system, the associated state data including the changed working mode state is recorded. The associated state data is configured to indicate adjustment of the working mode state of the first system to be the same as the changed working mode state. In this way, the first system, upon resumption or restore of operation, may maintain in the same working mode state as the second system. Thus, it is possible to ensure the consistency of the working mode states of the various systems during operation. Further it is possible to guarantee the consistency of the working mode states of various systems before and/or after the switch of various systems.

In some embodiments, the apparatus further includes a sending module. The sending module is configured to send, in response to switching from the third operation mode to the first operation mode or to the second operation mode, the associated state data to the first system.

The adjusting module 504 is further configured to adjust the working mode state of the first system to be the same as the changed working mode state of the second system.

In the present embodiment, since in the third operation mode, only the second system is in operation, while the first system is not in operation, thus in response to switching from the third operation mode to the first operation mode or to the second operation mode, the associated state data is sent to the first system. In this way, the first system, upon resumption or restore of operation, may maintain in the same working mode state as the second system. Thus, it is possible to ensure that, the working mode states of various systems of the electronic device maintain synchronized during operation.

In some embodiments, the associated state data includes at least one selected from the group consisting of the first state of the vibration mode, the first state of the silent mode, and the first screen brightness after the state change. The adjusting module 504 is further configured to adjust, in response to the associated state data including the first screen brightness, the screen brightness corresponding to the first system to the first screen brightness; adjust, in response to the associated state data including the first state of the silent mode, the silent mode state of the first system to the first state of the silent mode; and adjust, in response to the associated state data including the first state of the vibration mode, the vibration mode state of the first system to the first state of the vibration mode.

In the present embodiment, adjusting, in response to the associated state data including the first screen brightness, the screen brightness corresponding to the first system to the first screen brightness. In this way, the consistency of the working mode states and the screen brightness between various systems may be maintained, thereby avoiding eye discomfort caused by significant changes in screen brightness when the user switches between systems. Adjusting, in response to the associated state data including the first state of the silent mode, the silent mode state of the first system to the first state of the silent mode. In this way, the consistency of the working mode states and the silent mode states between various systems may be maintained, thereby avoiding the acoustic effects due to the silent mode state after the systems are switched. Adjusting, in response to the associated state data including the first state of the vibration mode, the vibration mode state of the first system to the first state of the vibration mode. In this way, the consistency of the working mode states and the vibration mode states between various systems may be maintained, thereby avoiding the effects due to the vibration mode state after the systems are switched.

In some embodiments, the associated state data includes at least one selected from the group consisting of the second state of the vibration mode, the second state of the silent mode, and the second screen brightness before the state change. In response to the working mode state entering the disabled state, the adjusting module 504 is further configured to: adjust, in response to the associated state data including the second screen brightness, the screen brightness of the first systems and the second systems to the second screen brightness; adjust, in response to the associated state data including the second state of the silent mode, the silent mode states of the first system and the second system to the second state of the silent mode; and adjust, in response to the associated state data including the second state of the vibration mode, the vibration mode states of the first system and the second system to the second state of the vibration mode.

In the present embodiment, when the working mode state enters into the disabled state from the enabled state, adjusting, in response to the associated state data including the second screen brightness, the screen brightness of the first system and the second system to the second screen brightness. In this way, in response to exiting the working mode, the second system automatically reverts to the screen brightness prior to entering the working mode, and the first system is able to maintain synchronized with the second system. When the working mode state enters into the disabled state, adjusting, in response to the associated state data including the second state of the silent mode, the silent mode state of the first system and the second system to the second state of the silent mode. In this way, in response to exiting the working mode, the second system automatically reverts to the silent mode state prior to entering the working mode, and the first system is able to maintain synchronized with the second system with respect to the silent mode state. When the working mode state enters into the disabled state, adjusting, in response to the associated state data including the second state of the vibration mode, the vibration mode states of the first system and the second system to the second state of the vibration mode. In this way, in response to exiting the working mode, without a necessity of user operation, the second system automatically reverts to the vibration mode state prior to entering the working mode, and the first system is able to maintain synchronized with the second system with respect to the vibration mode state. A data synchronization is thus realized.

In some embodiments, the power consumption of the first operation mode is greater than that of the second operation mode, and the power consumption of the second operation mode is greater than that of the third operation mode.

In the present embodiment, the power consumption of the first operation mode is greater than that of the second operation mode, and the power consumption of the second operation mode is greater than that of the third operation mode. The user may be provided with a variety of optional operation modes while ensuring the operation of the electronic device, enabling the user to choose the operation mode required according to the battery level and power consumption, thereby effectively satisfying the user's usage demands in different scenarios.

The division of individual modules in the above-described dual-system state synchronization apparatus is for illustrative purposes only. In other embodiments, the dual-system state synchronization apparatus may be divided into different modules as needed, so as to accomplish all or a part of the functionalities of the above-mentioned dual-system state synchronization apparatus.

Specific limitations on the dual-system state synchronization apparatus may refer to the above limitations on the dual-system state synchronization method, which will not be elaborated herein. The various modules in the above-mentioned dual-system state synchronization apparatus may be implemented in whole or in part by software, hardware, or combinations thereof. The above-mentioned modules may be embedded in or independent of a processor of the electronic device in the form of hardware. The above-mentioned modules may be stored in a memory of the electronic device in the form of software, so as to be recalled by the processor, to perform the operation corresponding to the above-mentioned various modules.

Fig. 6 is a schematic diagram of an internal structure of the electronic device according to an embodiment of the present disclosure. As illustrated in Fig. 6, the electronic device includes a processor and a memory connected via a system bus. The processor is configured to provide the computing and control capacity, and to support the operation of the entire electronic device. The memory may include a non-volatile storage medium and a built-in memory. An operating system and a computer program is stored in the non-volatile storage medium. The computer program may be executed by the processor to implement the dual-system state synchronization method provided in the various embodiments below. The built-in memory is configured to provide a cached runtime environment for a computer program of an operating system in a non-volatile storage medium. The electronic device may be any terminal device, such as a cell phone, a tablet computer, a personal digital assistant (PDA), a point of sales (POS), an in-vehicle computer, a wearable device, etc.

The various modules in the dual-system state synchronization apparatus provided in the present disclosure may be implemented in the form of a computer program. The computer program may be able to run on a terminal or a server. A program module including the computer program may be stored on the memory of the electronic device. The computer program, when executed by the processor, is configured to implement the operation of the methods described in the present disclosure.

A computer-readable storage medium is also provided in the present disclosure. One or more non-volatile computer-readable storage mediums including a computer executable instruction is provided. The computer executable instruction, when being executed by one or more processors, is configured to enable the one or more processors to implement the operations of the dual-system state synchronization method.

A computer program product including an instruction is provided. When running on the computer, the computer program product is configured to enable the computer to implement the dual-system state synchronization method.

Any reference to a memory, a storage, a database or other media made in the embodiments of the present disclosure may include a non-volatile memory and/or a volatile memory. The non-volatile memory may include a read only memory (ROM), a programmable ROM (PROM), an electrically programmable ROM (EPROM) an electrically erasable programmable ROM (EEPROM), or a flash memory. The volatile memory may include a random-access memory (RAM), which may be configured as an external cache memory. As illustration but not limitation, the RAM nay be available in various forms, such as a static RAM (SRAM), a dynamic RAM (DRAM), a synchronous DRAM (SDRAM), a double data rate SDRAM ( DDRSDRAM), an enhanced SDRAM (ESDRAM), a synchronous link (Synchlink) DRAM (SLDRAM), a memory bus (Rambus), a direct RAM (RDRAM), a direct Rambus dynamic RAM (DRDRAM), and a Rambus dynamic RAM (RDRAM).

Technical features of the above-mentioned embodiments could be combined arbitrarily. In order to make the description concise, not all possible combinations of the various technical features in the above-mentioned embodiments are described. However, as long as there is no contradiction in the combination of these technical features, all should be considered to be within the scope of the specification.

The above-mentioned embodiments only express a few implementations of the present disclosure, the description thereof is relatively specific and detailed, but they could not be construed as a limitation on the scope of the patent application. It should be pointed out that, for those of ordinary skills in the art, without departing from the concept of the present disclosure, several modifications and improvements could be made, and these all fall within the protection scope of the present disclosure. Therefore, the protection scope of the present disclosure should be subject to the appended claims.

## Claims

1. A dual-system state synchronization method performed by an electronic device, the electronic device being capable of running a first system and a second system, the method comprising:
detecting, in a first operation mode or in a second operation mode, a working mode state of the first system; and
adjusting, in response to a change in the working mode state of the first system, a working mode state of the second system to be the same as that of the first system;
wherein in the first operation mode, both the first system and the second system are in operation, and an interface display is only performed by the first system; in the second operation mode, both the first system and the second system are in operation, and the interface display is performed by either the first system or the second system.

2. The method as claimed in claim 1, further comprising:
detecting, in the second operation mode, the working mode state of the first system and the working mode state of the second system, respectively;
determining, in response to the change in the working mode state of the first system, a first timestamp when the working mode state of the first system is changed;
determining, in response to a change in the working mode state of the second system, a second timestamp when the working mode state of the second system is changed; and
synchronizing, based on the first timestamp and the second timestamp, working mode states of the first system and the second system.

3. The method as claimed in claim 2, wherein
the synchronizing, based on the first timestamp and the second timestamp, the working mode states of the first system and the second system comprises:
adjusting the working mode state of a system corresponding to an earlier timestamp among the first timestamp and the second timestamp, to be the same as a working mode state of another system corresponding to a later timestamp among the first timestamp and the second timestamp.

4. The method as claimed in claim 1, further comprising:
detecting, in a third operation mode, the working mode state of the second system; wherein in the third operation mode, only the second system is in operation; and
recording, in response to a change in the working mode state of the second system, corresponding associated state data; wherein the associated state data comprises a changed working mode state;
wherein the associated state data is configured to indicate adjusting the working mode state of the first system to be the same as the changed working mode state.

5. The method as claimed in claim 4, further comprising:
sending, in response to switching from the third operation mode to the first operation mode or to the second operation mode, the associated state data to the first system; and
adjusting the working mode state of the first system to be the same as the changed working mode state of the second system.

6. The method as claimed in claim 5, wherein
the associated state data further comprises at least one selected from the group consisting of a first state of a vibration mode, a first state of a silent mode, and a first screen brightness after a state change;
the method further comprises:
adjusting, in response to the associated state data comprising the first screen brightness, a screen brightness corresponding to the first system to the first screen brightness;
adjusting, in response to the associated state data comprising the first state of the silent mode, a silent mode state of the first system to the first state of the silent mode; and
adjusting, in response to the associated state data comprising the first state of the vibration mode, a vibration mode state of the first system to the first state of the vibration mode.

7. The method as claimed in claim 5, wherein
the associated state data further comprises at least one selected from the group consisting of a second state of a vibration mode, a second state of a silent mode, and a second screen brightness before a state change;
in response to the working mode state entering a disabled state, the method further comprises:
adjusting, in response to the associated state data comprising the second screen brightness, screen brightness of the first system and the second system to the second screen brightness;
adjusting, in response to the associated state data comprising the second state of the silent mode, silent mode states of the first system and the second system to the second state of the silent mode; and
adjusting, in response to the associated state data comprising the second state of the vibration mode, vibration mode states of the first system and the second system to the second state of the vibration mode.

8. The method as claimed in claim 5, wherein
a power consumption of the first operation mode is greater than that of the second operation mode, and a power consumption of the second operation mode is greater than that of the third operation mode.

9. The method as claimed in any of claims 1-8, wherein
the electronic device comprises a first processor corresponding to the first system and a second processor corresponding to the second system, the first processor is a core processor.

10. A dual-system state synchronization apparatus applied to an electronic device, the electronic device being capable of running a first system and a second system, the apparatus comprising:
a detecting module, configured to detect, in a first operation mode or in a second operation mode, a working mode state of the first system; and
an adjusting module, configured to adjust, in response to a change in the working mode state of the first system, a working mode state of the second system to be the same as that of the first system;
wherein in the first operation mode, both the first system and the second system are in operation, and an interface display is only performed by the first system;
in the second operation mode, both the first system and the second system are in operation, and the interface display is performed by either the first system or the second system.

11. The apparatus as claimed in claim 10, wherein
the detecting module is further configured to:
detect, in the second operation mode, the working mode state of the first system and the working mode state of the second system, respectively;
determine, in response to the change in the working mode state of the first system, a first timestamp when the working mode state of the first system is changed; and
determine, in response to a change in the working mode state of the second system, a second timestamp when the working mode state of the second system is changed; and
the adjusting module is further configured to synchronize, based on the first timestamp and the second timestamp, working mode states of the first system and the second system.

12. The apparatus as claimed in claim 11, wherein
the adjusting module is further configured to adjust the working mode state of a system corresponding to an earlier timestamp among the first timestamp and the second timestamp, to be the same as a working mode state of another system corresponding to a later timestamp among the first timestamp and the second timestamp.

13. The apparatus as claimed in claim 10, wherein
the detecting module is further configured to:
detect, in a third operation mode, the working mode state of the second system; wherein in the third operation mode, only the second system is in operation; and
record, in response to a change in the working mode state of the second system, corresponding associated state data; wherein the associated state data comprises a changed working mode state;
wherein the associated state data is configured to indicate adjusting the working mode state of the first system to be the same as the changed working mode state.

14. The apparatus as claimed in claim 13, wherein
the apparatus further comprises a sending module;
the sending module is configured to send, in response to switching from the third operation mode to the first operation mode or to the second operation mode, the associated state data to the first system; and
the adjusting module is further configured to adjust the working mode state of the first system to be the same as the changed working mode state of the second system.

15. The apparatus as claimed in claim 14, wherein
the associated state data further comprises at least one selected from the group consisting of a first state of a vibration mode, a first state of a silent mode, and a first screen brightness after a state change;
the adjusting module is further configured to:
adjusting, in response to the associated state data comprising the first screen brightness, a screen brightness corresponding to the first system to the first screen brightness;
adjusting, in response to the associated state data comprising the first state of the silent mode, a silent mode state of the first system to the first state of the silent mode; and
adjusting, in response to the associated state data comprising the first state of the vibration mode, a vibration mode state of the first system to the first state of the vibration mode.

16. The apparatus as claimed in claim 14, wherein
the associated state data further comprises at least one selected from the group consisting of a second state of a vibration mode, a second state of a silent mode, and a second screen brightness before a state change;
in response to the working mode state entering a disabled state, the adjusting module is further configured to:
adjust, in response to the associated state data comprising the second screen brightness, screen brightness of the first system and the second system to the second screen brightness; adjust, in response to the associated state data comprising the second state of the silent mode, silent mode states of the first system and the second system to the second state of the silent mode; and
adjust, in response to the associated state data comprising the second state of the vibration mode, vibration mode states of the first system and the second system to the second state of the vibration mode.

17. The apparatus as claimed in any of claims 10-16, wherein
a power consumption of the first operation mode is greater than that of the second operation mode, and a power consumption of the second operation mode is greater than that of the third operation mode.

18. An electronic device, comprising a memory and a processor, and the memory storing a computer program, wherein
when the processor executes the computer program, the processor is enabled to implement operations of the method as claimed in any of claims 1 to 9.

19. A computer-readable storage medium storing a computer program, wherein
the computer program, when being executed by a processor, is configured to implement operations of the method as claimed in any of claims 1-9.

20. A computer program product comprising a computer program, wherein
the computer program, when being executed by a processor, is configured to implement operations of the method as claimed in any of claims 1-9.
